# EUROPÄISCHE PATENTSCHRIFT

(11) **EP 1 203 357 B1**
(45) Veröffentlichungstag und Bekanntmachung des Hinweises auf die Patenterteilung: **02.01.2004**
(21) Anmeldenummer: 00962208.5
(22) Anmeldetag: 02.08.2000
(51) Int. Cl.: G07F 7/10

(54) **SMS-E-COMMERCE**
SHORT MESSAGE SERVICE (SMS) E-COMMERCE
COMMERCE ELECTRONIQUE POUR SERVICES D'ENVOI DE MESSAGES COURTS

(30) Priorität: 12.08.1999 DE 19938201
(43) Veröffentlichungstag der Anmeldung: 08.05.2002
(73) Patentinhaber: Vodafone Holding GmbH, 40213 Düsseldorf (DE)
(72) Erfinder: ROSENBERGER, Frank, D-40668 Meerbusch (DE)
(74) Vertreter: Meissner, Peter E., Dipl.-Ing.
(86) Internationale Anmeldenummer: PCT/DE2000/002624
(87) Internationale Veröffentlichungsnummer: WO 2001/013341

(56) Entgegenhaltungen:
- WO-A-98/18251
- WO-A-98/28900
- WO-A-98/49658
- WO-A-99/09502
- WO-A-99/33034
- SELLIN R: "NEUE MOBILE PERSPEKTIVEN MIT WAP" NTZ NACHRICHTENTECHNISCHE ZEITSCHRIFT,DE,VDE VERLAG GMBH. BERLIN, Bd. 52, Nr. 11, 1999, Seiten 50-53, XP000868398 ISSN: 0027-707X
- MAUNDER A: "DAWN OF A NEW ERA IN BILLING SYSTEMS: THE INFORMATION AGE" ANNUAL REVIEW OF COMMUNICATIONS, 1997, XP000720972

## Beschreibung

Die Erfindung betrifft Verfahren und Vorrichtungen zur Durchführung und Abrechnung eines über das Internet initiierten Kaufes eines Käufers bei einem Verkäufer von Produkten oder Dienstleistungen.

Der nächstliegende Stand der Technik (EP 0 546 584 A) zeigt ein Verfahren zur Authorisierung in einem Netzwerk. Der Benutzer übermittelt über ein Dateneingabegerät seine Identifizierung (User-ID, Passwort o. ä.) und/oder eine Identifizierungs-Kennung des Dateneingabegeräts zusammen mit einer Aufforderung zur Generierung einer TAN (oder eines vergleichbaren Passworts) an einen Rechner, welcher den Autorisierungsvorgang übernimmt und nachfolgend kurz Autorisierungsrechner genannt wird. In diesem Autorisierungsrechner wird durch einen Zufallsgenerator eine alphanumerische oder nur numerische TAN (oder eine vergleichbares Passwort) errechnet oder einer Datei entnommen. Dann wird von dem Autorisierungsrechner parallel zur bestehenden Verbindung mit dem Dateneingabegerät, über einen anderen Übertragungsweg diese TAN (oder ein vergleichbares Passwort) an einen Empfänger übermittelt. Hierzu verfügt der Autorisierungsrechner über die erforderliche(n) Telefon-, Funkruf- oder Faxnummern, E-Mail- oder Netzadresse(n). Die diesbezüglichen Daten sind üblicherweise im Autorisierungsrechner gespeichert. Es ist jedoch möglich, dass d Autorisierungsrechner seinerseits sich diese Daten aus einer Datenbank holt, welche sich auf einem anderen Rechner befindet. Insoweit kann auch der Autorisierungsrechner unter Verwendung des erfindungsgemässem Verfahrens von sich aus einen Zugriff auf diesen anderen Rechner tätigen. Der berechtigte Benutzer kann die ihm so übermittelte TAN (oder das vergleichbare Passwort) manuell in sein Dateneingabegerät eingeben und wieder an den Autorisierungsrechner versenden. Bei automatisierten Verfahren erfolgt eine automatische Übertragung der TAN (oder des vergleichbare Passworts). Der Autorisierungsrechner überprüft nunmehr die Übereinstimmung zwischen allen (von ihm vergebenen) gültigen TAN's (oder vergleichbaren Passwörtem) und ermöglicht nach dieser Autorisierungsprüfung eine Freigabe des Datenflusses zwischen dem Dateneingabegerät und einer Empfangseinheit.

Aufgabe der vorliegenden Erfindung ist es, möglichst effizient und zuverlässig die Durchführung und Abrechnung von Käufen eines Käufers mit einem Mobilfunkendgerät über das Internet zu ermöglichen. Die Aufgabe wird durch die Gegenstände der unabhängigen Ansprüche gelöst.

Das erfindungsgemäße Verfahren ist aufgrund der Kombination von mobilfunknetzseitigen Identifizierungsvorgängen (insbesondere Clip-Übermittlung der MSISDN) mit transaktionsbezogenen Transaktionsnummern einerseits für den Käufer sehr bequem und andererseits sowohl für den Käufer als auch den Verkäufer sehr sicher.

Die Erfindung eignet sich insbesondere für eine von einem Käufer über ein Mobilfunkendgerät über das Internet (beispielsweise über eine WAP-Homepage des Verkäufers) initiierte Kaufanfrage; es kann jedoch auch für die Authentisierung, Bonitätsprüfung und Abwicklung zur Abrechnung von Käufen verwendet werden, welche von einem Käufer mit einem Computer über das Festnetz (z.B. über die Homepage des Verkäufers) initiiert wurden, in welchem Falle lediglich die identitätsüberprüfung durch Transaktionsnummer und Mobilfunkteilnehmer-Identität (insbesondere MSISDN) über ein Mobilfunkendgerät dieses Käufers erfolgt.
Die finanzielle Abrechnung kann sehr effizient über die Fernmelderechnung (Mobilfunkgebührenrechnung) des Käufers erfolgen. Sie kann alternativ auch dadurch erfolgen, daß von einem Bankkonto des Käufers ein Betrag abgebucht und dieser Betrag auf ein Bankkonto des Verkäufers aufgebucht wird.

Aspekte der Erfindung sind im unabhängigen Anspruch 1 offenbart.

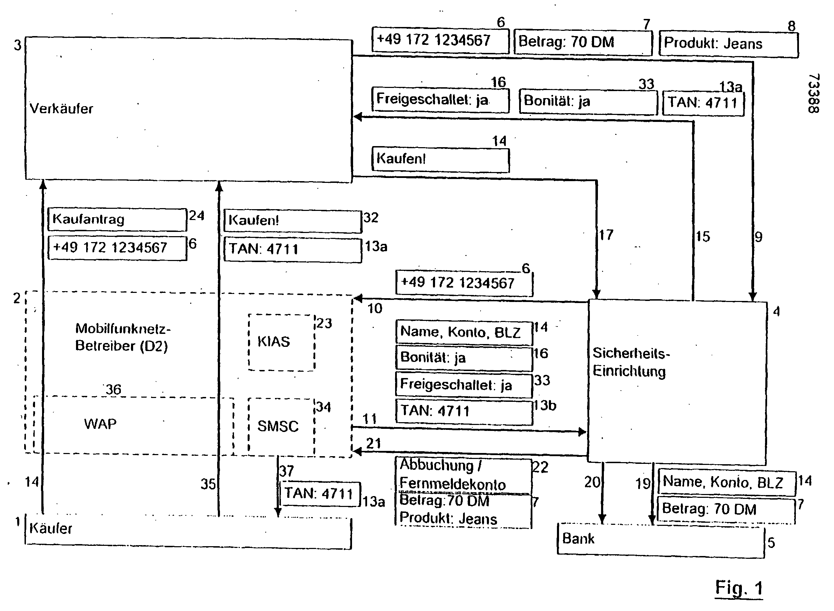

Weitere Merkmale und Vorteile der Erfindung ergeben sich aus den Ansprüchen und der nachfolgenden Beschreibung der Erfindung anhand eines Ausführungsbeispieles. Dabei zeigt als einzige Figur
- Fig. 1: als Blockschaltbild die erfindungsgemäße Durchführung und Abrechnung eines Kaufes über das Internet.

Figur 1 zeigt einen Käufer 1 (mit einem Mobilfunkendgerät mit einer Mobilfunkteilnehmer-Identifikationskarte SIM), einen Mobilfunknetzbetreiber 2 eines Mobilfunknetzes, einen Verkäufer 3 von Produkten oder Dienstleistungen, eine vom Mobilfunknetzbetreiber zugreifbare oder ihm zugehörige Sicherheitseinrichtung 4 und eine Bank 5.

Mit Käufer 1, Verkäufer 3, Sicherheitseinrichtung 4 und Bank 5 sind hier insbesondere deren Endgeräte (Kommunikationseinrichtungen, Computer, Datenbanken) gemeint.

Der Käufer 1 surft im Internet. Dies kann grundsätzlich mit einem Computer über Festnetz erfolgen. Hier erfolgt es mit einem nicht dargestellten Mobilfunkendgerät mit einer SIM-Karte, beispielsweise gemäß GSM oder UMTS. Der Käufer 1 surft hier mit einem Mobilfunkendgerät per WAP 36 über das Mobilfunknetz 2 im Internet. Der Käufer 1 entscheidet sich für ein auf einer Homepage des Verkäufers 3 angebotenes Produkt beispielsweise durch Anklicken mit einer Maus eines entsprechenden Buttons auf der Homepage des Verkäufers. Um den Kauf abrechnen zu können, fragt der Verkäufer 3 (beispielsweise interaktiv durch seinen Host für die Homepage) nach der Mobilfunk-Telefonnummer 6 des Käufers 1. Diese kann ihm evtl. auch bereits per Clip beim Surfen übertragen werden. Der Käufer 1 übermittelt (7) zu seinem Kaufantrag 24 (über sein Mobilfunkendgerät) seine Mobilfunkteilnehmer-Identität in Form seiner Mobilfunk-Telefonnummer 6 (+491721234567) beispielsweise über WAP per Mobilfunk oder per Mobilfunk-Kurznachricht an den Verkäufer 3. Der Verkäufer 3 übermittelt zumindest diese Mobilfunk-Telefonnummer 6 (sowie hier weitere Daten in Form des Betrages 70,-- DM des Kaufpreises 7) sowie der Produktbezeichnung ("Jeans") 8 an die Sicherheitseinrichtung 4 im Übertragungsschritt 9 beispielsweise verschlüsselt über ein Festnetz und/oder VPN. Die Sicherheitseinrichtung 4 übermittelt hierauf zumindest die Mobilfunk-Telefonnummer 6 im Übertragungsschritt 10 an den Mobilunknetzbetreiber 2. Der Mobilfunknetzbetreiber 2 überprüft aufgrund der Mobilfunk-Teilnehmernummer 6 hierauf, ob eine erfindungsgemäße Abrechnung von Käufen über das Internet für die Mobilfunknummer 6 freigeschaltet ist. Diese Überprüfung kann beispielsweise von einem WAP-Server 36 bzw. unter Zugriff auf eine entsprechende Datei (beispielsweise im HLR oder im KIAS oder im NMC) erfolgen. Hierbei kann auch eine Bonitätsprüfung des Mobilfunknutzers mit der Telefonnummer 6 erfolgen. Im Falle einer positiven Überprüfung der Freischaltung für diese Telefonnummer 6 und ggf. einer positiven Bonitätsüberprüfung durch den Mobilfunkbetreiber 2 (und/oder eine Bank) ermöglicht der Mobilfunknetzbetreiber 2 eine Durchführung und Abrechnung des Kaufes über das Internet. Hierzu werden im Schritt 11 vom Mobilfunknetzbetreiber 2 an die Sicherheitseinrichtung 4 die Daten 14,16,33,13b übertragen. Falls die Abrechnung später auf der Mobilfunkabrechnung des Käufers 1 (beispielsweise unter Angabe des Preises und/oder des Verkäufers und/oder des Produktes) erfolgen soll, wird hierzu evtl. lediglich die Transaktionsnummer TAN 4711 (Bezugszeichen 13b) übermittelt (welche bereits implizit durch ihre Übermittlung die Freischaltung und Bonität für die Mobilfunknummer 6 repräsentieren kann). Falls die Abrechnung über ein Konto bei einer Bank 5 erfolgen soll, wird im Schritt 11 zusätzlich die Kontonummer, Bankleitzahl und der Name (Daten mit Bezugszeichen 14) vom Mobilfunknetzbetreiber 2 an die Sicherheitseinrichtung 4 übertragen. Die in einer Einrichtung (Rechner mit Datenbank) im Mobilfunknetz generierte und/oder gespeicherte Transaktionsnummer 13a wird von dort ausgehend ebenfalls an den Käufer 1 übertragen (Übertragungsschritt 37), beispielsweise per Kurznachricht vom SMSC 34 des Mobilfunkbetreibers an ein Mobilfunkendgerät des Käufers 1. Die Transaktionsnummer 13a für den Käufer 1 ist mit der (13b) für die Sicherheitseinrichtung 4 und/oder den Verkäufer 3 hier identisch. Diese Transaktionsnummer (4711 mit dem Bezugszeichen 13a) übermittelt (35) der Käufer 1 per Mobilfunk dem Verkäufer 3. Dies kann z.B. entweder per Kurznachricht (34) oder über das WAP-Protokoll (36) erfolgen. Gegegebenenfalls kann hierbei oder danach noch einmal der Käufer 1 bestätigen, daß er kaufen möchte (32). Von der Sicherheitseinrichtung 4 werden an den Verkäufer 3 im Schritt 15 (unabhängig, also vor, gleichzeitig oder nach dem Schritt 14) Informationen 16,33 über die Freischaltung und/oder Bonität der Mobilfunknummer 6 (per Festnetz etc.) übertragen.

Die Überprüfung der Transaktionsnummern 13a,13b kann insbesondere beim Verkäufer 3 oder der Sicherheitseinrichtung 4 erfolgen.

Sobald der Verkäufer 3 sowohl die Transaktionsnummer 13a vom Käufer 1 übermittelt (35) bekam (ggf. mit einer Bestätigung 32, daß der Käufer 1 noch kaufen will) und andererseits ihm die explizite oder implizite (13a) Meldung 16 vorliegt, daß der Nutzer freigeschaltet ist und ggf. Bonität vorliegt, kann er (ggf. nach Überprügung seiner Lagerbestände) im Schritt 17 die Telefonnummer 6 des Käufers sowie den Betrag 7 und die Produktbezeichnung 8 an die Sicherheitseinrichtung 4 übermitteln. Falls die Überprüfung der TAN 13a in der Sicherheitseinrichtung 4 erfolgen soll, wird hierbei die dem Verkäufer 3 vom Käufer 1 übermittelte (35) TAN 13a übersandt (17), und die Überprüfung der Transaktionsnummer erfolgt in der Sicherheitseinrichtung 4 durch Vergleich der der Sicherheitseinrichtung 4 vom Mobilfunknetzbetreiber 2 übermittelten Transaktionsnummer 13b mit der der Sicherheitseinrichtung 4 vom Verkäufer 3 übermittelten (diesem vom Käufer 1 davor übermittelten) Transaktionsnummer 13a, worauf eine Bestätigung an den Verkäufer 3 erfolgen kann und eine Abrechnung veranlaßt wird.

Alternativ wird mit der Meldung 16 die der Sicherheitseinrichtung 4 vom Mobilfunknetzbetreiber 2 übermittelte Transaktionsnummer 13b an den Verkäufer 3 übersandt, und beim Verkäufer 3 (= beim Rechner des Verkäufers) erfolgt ein Vergleich dieser Transaktionsnummer 13b mit der dem Verkäufer 3 vom Käufer 1 übermittelten Transaktionsnummer 13a, wobei bei positiver Überprüfung (Gleichheit) der Transaktionsnummem 13a, 13b eine Kaufbestätigung 6,7,8 an die Sicherheitseinrichtung 4 übermittelt wird, durch welche dort eine Abrechnung 19, 20 bzw. 21 veranlaßt wird. (Die Aufbuchung auf das Verkäufer-Konto kann hier z.B. über die Bank 5 erfolgen 20.)

Die Abrechnung des Kaufes kann dadurch erfolgen, daß die Sicherheitseinrichtung 4 an eine Bank (per Festnetz etc.) im Übermittlungsschritt 19 Informationen betreffend Kontonummer, Bankleitzahl, Name 14, Kaufpreis 7 und Produktbezeichnung 8 übermittelt mit der Anweisung, den Kaufpreis von einem durch die Daten 14 identifizierten Konto des Käufers 1 bei der Bank 5 abzubuchen sowie auf ein hierbei oder danach (20) angegebenes Konto des Verkäufers 3 aufzubuchen. Noch einfacher ist es, wenn alternativ statt der Übermittlung 19, 20 an eine Bank eine Information 22 im Übertragungsschritt 21 an das KIAS 23 etc. des Mobilfunknetzbetreibers 2 per Festnetz oder Mobilfunk etc. übermittelt wird, wobei die übermittelten Informationen eine Abbuchunsaufforderung 22, die Produktinformationen 8 und den Preis 7 sowie den Verkäufer 3 enthalten, worauf mit der nächsten Telekommunikationsrechnung der Preis 7 dem Käufer 1 mitberechnet wird. Die Aufbuchung auf das Verkäufer-Konto kann hier z.B. über die Bank 5 erfolgen (20).

## Patentansprüche

1. Verfahren zur Durchführung und Abrechnung eines über das Intemet (7, 14) tätigbaren Kaufes eines Käufers (1) bei einem Verkäufer (3) von Produkten (8) oder Dienstleistungen,
wobei für einen vom Käufer (1) über das Intemet (36) beantragten (24) Kauf seine Mobilfunkteilnehmer-Identität repräsentierende Mobilfunkteilnehmer-Identitätsdaten (6) von ihm über ein Mobilfunknetz (2) an den Verkäufer (3) übermittelt (2,7) und vom Verkäufer (3) an eine Sicherheitseinrichtung (4) weiterübermittett (9) werden,
worauf die Sicherheitseinrichtung die Mobilfunk-Telefonnummer an den Mobilfunknetzbetreiber (21) übermittelt und dieser die Freischaltung für Käufe überprüft und eine Freigabe an die Sicherheitseinrichtung übermittelt (11), und zwar zusammen mit einer Transaktionsnummer,
worauf diese Transaktionsnummer von der Sicherheitseinrichtung auch an den Käufer übermittelt wird (37) und dieser sie an den Verkäufer weiterleitet (35), der seinerseits von der Sicherheitseinrichtung ebenfalls die Transaktionsnummer erhält (15),
worauf im Falle einer positiven Überprüfung der Transaktionsnummer (13a) beim Verkäufer oder der Sicherheitseinrichtung eine Abrechnung (19,20;21) veranlaßt wird.

2. Verfahren nach Anspruch 1,
**dadurch gekennzeichnet,**
**dass** der Kauf über ein Mobilfunknetz (2) und das Intemet per WAP beantragt (7) wird.

3. Verfahren nach Anspruch 1,
**dadurch gekennzeichnet,**
**dass** der Kauf über ein Festnetz beantragt wird.

4. Verfahren nach einem der vorhergehenden Ansprüche,
**dadurch gekennzeichnet,**
**dass** die Mobiffunkteilnehmer-Identitätsdaten die Telefonnummer (6) des Käufers (1) enthalten.

5. Verfahren nach einem der vorhergehenden Ansprüche,
**dadurch gekennzeichnet,**
**dass** die von einer Einrichtung im Mobilfunknetz generierte und/oder gespeicherte, dem Käufer (1) übermittelte (37) Transaktionsnummer (13a) und die dem Verkäufer (3) übermittelte (11) Transaktionsnummer (13b) gleich sind.

6. Verfahren nach einem der vorhergehenden Ansprüche,
**dadurch gekennzeichnet,**
**dass** die Mobilfunkteilnehmer-Identitätsdaten (6) per Mobilfunk vom Käufer (1) an den Verkäufer (3) übermittelt (7) werden.

7. Verfahren nach Anspruch 6,
**dadurch gekennzeichnet,**
**dass** die Mobilfunkteilnehmer-Identitätsdaten (6) des Mobilfunkteilnehmers (1) per Clip oder WAP an den Verkäufer (3) übermittelt werden.

8. Verfahren nach einem der vorhergehenden Ansprüche,
**dadurch gekennzeichnet,**
**dass** die Transaktionsnummer (13a) an den Käufer (1) per Mobilfunkkurznachricht (15), insbesondere GSM, SMS-MT übermittelt wird.

9. Verfahren nach einem der vorhergehenden Ansprüche,
**dadurch gekennzeichnet,**
**dass** nach Weiterübermittlung der Transaktionsnummer vom Käufer an den Verkäufer sie von diesem an die Sicherheitseinrichtung (4) weiterübermittelt wird.

10. Verfahren nach einem der vorhergehenden Ansprüche,
**dadurch gekennzeichnet,**
**dass** in der Sicherheitseinrichtung (4) zur Überprüfung die vom Käufer (1) über den Verkäufer (3) übermittelte Transaktionsnummer (13a) mit der der Sicherheitseinrichtung (4) bereits vom Möbilfunknetzbetreiber (2) übermittelten (11) Transaktionsnummer (13b) verglichen wird.

11. Verfahren nach einem der vorhergehenden Ansprüche,
**dadurch gekennzeichnet,**
**dass** die Transaktionsnummer (13a;13b) nur für einen vorgegebenen Zeitraum gültig ist und eine Überprüfung nach diesem Zeitraum stets als negativ betrachtet wird.

12. Verfahren nach einem der vorhergehenden Ansprüche,
**dadurch gekennzeichnet,**
**dass** spätestens vor Abrechnung (19,20;21) eines Kaufes aufgrund der Mobilfunkteilnehmer-Identitätsdaten (6) die Freischaltung des Käufers oder seines Mobilfunkendgerätes oder seiner Mobilfunkteilnehmer-Identitätskarte SIM für das erfindungsgemäße Verfahren überprüft wird.

13. Verfahren nach einem der vorhergehenden Ansprüche,
**dadurch gekennzeichnet,**
**dass** die Überprüfung der Freischaltung des Kunden vom Mobilfunknetzbetreiber (2) vor der Übermittlung einer Transaktionsnummer an die Sicherheitseinrichtung (4) und/oder den Käufer (1) erfolgt und dass eine Transaktionsnummer nur im Falle des Vorliegens einer Freischaltung übermittelt wird.

14. Verfahren nach einem der vorhergehenden Ansprüche,
**dadurch gekennzeichnet,**
**dass** vor der Übermittlung einer Transaktionsnummer an den Käufer (1) und die Sicherheitseinrichtung (4) auch die Bonität des Käufers (1) vom Mobilfunknetzbetreiber (2) und/oder einer Bank geprüft wird.

15. Verfahren nach einem der vorhergehenden Ansprüche,
**dadurch gekennzeichnet,**
**dass** die Abrechnung des Kaufpreises über die Femmelderechnung des Käufers (1) durch den Betreiber (2) des beim Kauf benutzten Mobilfunknetzes (2) erfolgt.

16. Verfahren nach einem der Ansprüche 1 bis 14,
**dadurch gekennzeichnet,**
**dass** die Abrechnung (19,20) dadurch erfolgt, dass von der Sicherheitseinrichtung (4) an eine Bank eine Anweisung zum Abbuchen von einem Konto des Käufers bei der Bank unter Angabe von der Sicherheitseinrichtung (4) übermittelten Daten (14) betreffend das Käufer-Konto übermittelt wird und eine Aufbuchung auf ein Konto des Verkäufers (3) bei der Bank (5) erfolgt.

## Claims

1. Method for carrying out and invoicing a purchase, which can be effected via the internet (7, 14), by a purchaser (1) from a seller (3) of products (8) or services,
where, for a purchase requested (24) by the purchaser (1) via the internet (36), mobile subscriber identity data (6) representing his mobile subscriber identity are sent (2, 7) by him via a mobile telephony network (2) to the seller (3) and are passed on (9) by the seller (3) to a security facility (4),
whereupon the security facility sends the mobile phone number to the mobile network operator (21), and the latter verifies authorisation for purchases and sends (11) an approval to the security facility, together with a transaction number,
whereupon this transaction number is sent (37) by the security facility to the purchaser also, and the latter passes it on (35) to the seller, who also receives (15) the transaction number from the security facility,
whereupon, provided that there is positive verification of the transaction number (13a) by the seller or the security facility, an invoicing process (19, 20; 21) is arranged.

2. Method as in Claim 1,
**characterised in that**
the purchase is requested (7) via a mobile telephony network (2) and the internet by WAP.

3. Method as in Claim 1,
**characterised in that**
the purchase is requested via a fixed network.

4. Method as in one of the preceding Claims,
**characterised in that**
the mobile subscriber identity data contain the telephone number (6) of the purchaser (1).

5. Method as in one of the preceding Claims,
**characterised in that**
the transaction number (13a) generated and/or stored by a facility in the mobile telephony network and sent (37) to the purchaser (1), and the transaction number (13b) sent (11) to the seller (3), are the same.

6. Method as in one of the preceding Claims,
**characterised in that**
the mobile subscriber identity data (6) are sent (7) by the purchaser (1) to the seller (3) by mobile telephony.

7. Method as in Claim 6,
**characterised in that**
the mobile subscriber identity data (6) of the mobile subscriber (1) are sent to the seller (3) by CLIP or WAP.

8. Method as in one of the preceding Claims,
**characterised in that**
the transaction number (13a) is sent to the purchaser (1) by mobile telephony short messaging (15), in particular GSM, SMS-MT.

9. Method as in one of the preceding Claims,
**characterised in that**;
after the transaction number has been passed on from the purchaser to the seller, it is passed on by the latter to the security facility (4).

10. Method as in one of the preceding Claims,
**characterised in that**
in the security facility, for the purpose of verification, the transaction number (13a) sent by the purchaser (1) via the seller (3) is compared with the transaction number (13b) already sent (11) to the security facility (4) by the mobile network operator (2).

11. Method as in one of the preceding Claims,
**characterised in that**
the transaction number (13a; 13b) is valid for a predetermined period only, and that any verification after this period will always be considered as being negative.

12. Method as in one of the preceding Claims,
**characterised in that**,
at the latest prior to the invoicing (19, 20; 21) of a purchase on the basis of the mobile subscriber identity data (6), the authorisation of the purchaser or of his mobile phone terminal or of his mobile subscriber identity SIM card is verified for the method of the invention.

13. Method as in one of the preceding Claims,
**characterised in that**
the verification of the authorisation of the customer by the mobile network operator (2) takes place before a transaction number is sent to the security facility (4) and/or to the purchaser (1), and that a transaction number is only sent where authorisation is present.

14. Method as in one of the preceding Claims,
**characterised in that**,
prior to sending a transaction number to the purchaser (1) and to the security facility (4), the credit-worthiness of the purchaser (1) is also checked by the mobile network operator (2) and/or by a bank.

15. Method as in one of the preceding Claims,
**characterised in that**
the invoicing of the purchase price is effected by means of the telephone bill of the purchaser (1) via the operator (2) of the mobile telephony network (2) used for the purchase.

16. Method as in one of Claims 1 to 14,
**characterised in that**
the invoicing process (19, 20) is effected **in that** an order is sent by the security facility (4) to a bank for the purpose of debiting an account of the purchaser with the bank, stating the data (14) sent by the security facility (4) relating to the purchaser's account, and a credit entry is made to an account of the seller (3) with the bank (5).

## Revendications

1. Procédé pour la réalisation et le règlement d'un achat pouvant être effectué via Internet (7, 14) par un acheteur (1) auprès d'un vendeur (3) de produits (8) ou de services, par lequel, pour un achat demandé (24) par l'acheteur (1) via Internet (36), des données d'identité d'abonné du téléphone mobile (6) représentant son identité d'abonné du téléphone mobile sont transmises (2,7) par lui par le biais d'un réseau de téléphonie mobile (2) au vendeur (3) et retransmises (9) par le vendeur (3) à un dispositif de sécurité (4), après quoi le dispositif de sécurité transmet le numéro de téléphone mobile à l'exploitant de réseau de téléphonie mobile (21) et celui-ci vérifie l'autorisation d'achats et transmet (11) une autorisation au dispositif de sécurité, et ce en même temps qu'un numéro de transaction, après quoi ce numéro de transaction est transmis (37) par le dispositif de sécurité également à l'acheteur et celui-ci le retransmet (35) au vendeur qui, de son côté, reçoit (15) également le numéro de transaction de la part du dispositif de sécurité, après quoi, en cas de contrôle positif du numéro de transaction (13a) chez le vendeur ou dans le dispositif de sécurité, il est procédé à une imputation (19, 20 ; 21).

2. Procédé selon la revendication 1,
**caractérisé en ce que** l'achat est demandé (7) via un réseau de radiotéléphonie mobile (2) et Internet suivant le protocole WAP.

3. Procédé selon la revendication 1,
**caractérisé en ce que** l'achat est demandé via un réseau fixe.

4. Procédé selon l'une des revendications précédentes,
**caractérisé en ce que** les données d'identité d'abonné du téléphone mobile comportent le numéro de téléphone (6) de l'acheteur (1).

5. Procédé selon l'une des revendications précédentes,
**caractérisé en ce que** le numéro de transaction (13a) généré et/ou mis en mémoire par un dispositif dans le réseau de radiotéléphonie mobile et transmis (37) à l'acheteur (1) est identique au numéro de transaction (13b) transmis (11) au vendeur (3).

6. Procédé selon l'une des revendications précédentes,
**caractérisé en ce que** les données d'identité d'abonné du téléphone mobile (6) sont transmises (7) par téléphone mobile par l'acheteur (1) au vendeur (3).

7. Procédé selon la revendication 6,
**caractérisé en ce que** les données d'identité d'abonné du téléphone mobile (6) de l'abonné du téléphone mobile (1) sont transmises par Clip ou WAP au vendeur (3).

8. Procédé selon l'une des revendications précédentes,
**caractérisé en ce que** le numéro de transaction (13a) est transmis à l'acheteur (1) par message court par téléphone mobile (15), notamment par GSM, SMS-MT.

9. Procédé selon l'une des revendications précédentes,
**caractérisé en ce que**, après la retransmission du numéro de transaction par l'acheteur au vendeur, le numéro de transaction est retransmis par ce dernier au dispositif de sécurité (4).

10. Procédé selon l'une des revendications précédentes,
**caractérisé en ce que**, dans le dispositif de sécurité (4), pour vérification, le numéro de transaction (13a) transmis par l'acheteur (1) par l'intermédiaire du vendeur (3) est comparé au numéro de transaction (13b) déjà transmis (11) par l'exploitant de réseau de radiotéléphonie mobile (2) au dispositif de sécurité (4).

11. Procédé selon l'une des revendications précédentes,
**caractérisé en ce que** le numéro de transaction (13a ; 13b) n'est valable que pour une période prédéfinie et une vérification après cette période est toujours réputée négative.

12. Procédé selon l'une des revendications précédentes,
**caractérisé en ce qu'**au plus tard avant l'imputation (19, 20 ; 21) d'un achat, l'autorisation de l'acheteur ou de son terminal de radiotéléphonie mobile ou de sa carte d'identité d'abonné du téléphone mobile SIM est contrôlée sur la base des données d'identité d'abonné du téléphone mobile (6) pour le procédé suivant l'invention.

13. Procédé selon l'une des revendications précédentes,
**caractérisé en ce que** la vérification de l'autorisation du client par l'exploitant de réseau de radiotéléphonie mobile (2) a lieu avant la transmission d'un numéro de transaction au dispositif de sécurité (4) et/ou à l'acheteur (1) et **en ce qu'**un numéro de transaction est uniquement transmis dans le cas de l'existence d'une autorisation.

14. Procédé selon l'une des revendications précédentes,
**caractérisé en ce que**, avant la transmission d'un numéro de transaction à l'acheteur (1) et au dispositif de sécurité (4), la solvabilité de l'acheteur (1) est également contrôlée par l'exploitant de réseau de radiotéléphonie mobile (2) et/ou une banque.

15. Procédé selon l'une des revendications précédentes,
**caractérisé en ce que** l'imputation du prix d'achat a lieu par le biais de la facture de téléphone de l'acheteur (1) établie par l'exploitant (2) du réseau de radiotéléphonie mobile (2) utilisé lors de l'achat.

16. Procédé selon l'une des revendications 1 à 14,
**caractérisé en ce que** l'imputation (19, 20) est réalisée par le fait que le dispositif de sécurité (4) transmet à une banque un ordre de débit d'un compte de l'acheteur auprès de la banque avec mention des données (14) concernant le compte de l'acheteur transmises au dispositif de sécurité (4) et qu'un crédit est effectué sur un compte du vendeur (3) auprès de la banque (5).
